# EUROPEAN PATENT APPLICATION

(11) **EP 4 122 644 A1**
(43) Date of publication of application: **25.01.2023**
(21) Application number: 21186884.9
(22) Date of filing: 21.07.2021
(51) Int. Cl.: B23Q 7/04, B23Q 5/04

(54) **AUXILIARY SPINDLE FOR A TOOL HOLDER TURRET**

(71) Applicant: Gildemeister Italiana S.r.l., 24030 Brembate di Sopra (BG) (IT)
(72) Inventor: Passerini, Mirko, 20083 Gaggiano (IT); Milesi, Luca, 24015 San Giovanni Bianco (IT)
(74) Representative: MERH-IP Matias Erny Reichl Hoffmann Patentanwälte PartG mbB

(57) **Abstract**

Auxiliary spindle AS for clamping at least one workpiece W on a tool holder turret 200A - 200D for machining operation, in particular a tool holder turret 200A - 200D of a lathe having at least a spindle unit 310 configured to mount the auxiliary spindle AS onto turret port of a tool holder turret 200A - 200D and receive a workpiece W for machining operation of the received workpiece W on the tool holder turret. In addition, the spindle unit 310 further includes at least a receiving unit 311 configured to clamp the workpiece W onto the auxiliary spindle AS.

## Description

The present application relates to an auxiliary spindle for positioning a workpiece on a tool holder turret, particularly a tool holder turret of a lathe.

Machine tools of a generic type, such as for example a lathe or a turret lathe, typically comprise a machine frame that may be provided with at least two rotatably mounted work spindles facing each other and having parallel or coaxial spindle axis as well as a number of tool holding carriers integrally distributed in the machine frame. Accordingly, machining of a respective workpiece is normally conducted by inserting a workpiece in one of the aforementioned working spindles and approaching it with a designated machining tool mounted on one of the integrated tool holding carriers.

For example EP 2714 307 B1 relates to a machine tool, in particular a lathe, comprising a machine frame, a first work spindle arranged on a spindle carrier face of the machine frame and is configured to receive a first workpiece, a second work spindle facing the first work spindle that is configured to receive a second workpiece and two movable tool carrier slides on which a respective tool-carrying tool carrier, i.e. a turret, can be arranged.

Likewise, in DE 36 09 571 A1 a lathe having a holding device centered in the middle of the machine frame is described, in which a workpiece can be inserted in the aforementioned holding device while independently drivable machining units located in the surroundings of the holding device are configured to machine the affixed workpiece.

In general, machine tools of this type typically require that the machining tools are provided so as to enable a maximal efficient machining of the workpiece while, simultaneously, achieve the largest possible number of tools usable at the same time. This generally leads to the consideration of implementing tool holding turrets as tool carriers that are uniformly distributed and/or independently movable around a respective workpiece spindle leading to both, a high degree of flexibility regarding to control of implemented tools as well as a cost-efficient and rigid design of the machine tool. In contrast, however, since for maximal accessibility of the workpiece the surrounding area of the working spindle is normally holistically assigned to the working trajectories of the respective tool holding turrets (or analogically that of the working spindle), machine tools of this type, especially such using a multitude of tool holding turrets, experience a decreasing compactness in order to circumvent constraints resulting from potential collisions of the independently working tool holding turrets. In addition, workpiece machining is restricted to specific areas around the respective working spindles resulting in a relative small domain in which workpiece machining actually takes place while a large percentage of the potential work space of the machine tool remains unused.

Thus, to solve the above-mentioned problems and to improve the machining process of the machine tool, a machining system comprising an auxiliary spindle configured to additionally position a workpiece for machining operations on a tool holder turret is suggested having the features of the independent claims. Preferred embodiments of the invention are listed in the dependent claims.

On this account, the auxiliary spindle used in the machining system of the claimed invention may primarily include at least a spindle unit which is configured to receive at least one workpiece for the auxiliary spindle while being at the same time connectable to a respective tool turret port, such as a tooling station, of a tool holder turret implemented to a machine tool, particularly a lathe. Accordingly, the spindle unit of the present invention may represent a central juncture between a particular tool holder turret and the workpiece to be positioned on the tool holder turret by providing a connection point to both, the tool holder turret and the workpiece respectively. Specifically, to enable connection to a tool holder turret, the spindle unit may preferentially be configured to be adjustably mountable, such as by an adjustable connection element, to a specific type of tool turret port so that the auxiliary spindle can be integrated into any known tool holder turret format such as crown turrets, drum turrets, vertical turrets or head turrets. Alternatively, the spindle unit may be likewise connectable with a tool holder already mounted onto a respective tool holder turret so as to enable maximal accessibility for the given auxiliary spindle. Ways of connecting the auxiliary spindle via the spindle unit to the respective tool turret port may be equally adaptable to the needs to the respective tool holder turret and may include cap screwing, wedge fixation or collet clamping, yet, naturally, also any other way of firmly positioning the auxiliary spindle onto a tool holder turret may be applicable.

Further, for enabling a connection to the at least one workpiece, the spindle unit may additionally include at least one receiving unit configured to at least clamp a workpiece for machining operations on the auxiliary spindle, leading likewise to a well-defined and robust positioning of the respective workpiece on the tool holder turret. On that account, by the claimed auxiliary spindle, a precise and universally usable way of positioning at least one respective workpiece onto any given tool holder turret, particularly of a lathe, can be realized, generating an improved efficiency and use of the working space of the lathe by allowing for machining operations on the tool holder turret additional to such performed on the working spindles.

Based on this, to further ensure optimal conditions for any type of precision machining of the clamped workpiece on the tool holder turret, such as milling, drilling, yet also cutting or grinding processes, the auxiliary spindle may be additionally configured to at least rotate the clamped workpiece along an auxiliary spindle axis defined by the internal spindle geometry of auxiliary spindle. Here, properties of the rotary movement of the respective workpiece (rotating speed, torque etc.) may be adjusted by the auxiliary spindle itself or by an additional element according to the respective requirements given for a specific machining process and thus allow for a maximal versatility of the auxiliary spindle when applied in a pertaining lathe.

In addition, in a preferred embodiment, the auxiliary spindle may likewise be configured to interact with the driving system of the tool holder turret the auxiliary spindle is mounted onto, enabling an even more precise machining process of the clamped workpiece. For instance, the auxiliary spindle may preferably be coupled with a respective tool holder turret so that by mounting the spindle unit of the auxiliary spindle to this at least one tool holder turret, the auxiliary spindle, in particular its degrees of freedom, can be controlled by the aforementioned driving system, allowing the auxiliary spindle to be driven by the same source as common tools of the tool holder turret would be. Here, for example, by mounting the spindle unit to a respective tool turret port, the auxiliary spindle may be configured to mechanically connect to a drive of the given tool holder turret, such as an implemented motor, and thus may be capable to respond and alter its movement patterns, specifically the rotational movement of the clamped workpiece, in accordance to a target movement set by the given driving system.

The auxiliary spindle may also be connectable to a drive arranged externally from the tool holder turret, such as by a drive of an independent tool holder mounted on the tool holder turret, and may be only steered by the aforementioned driving system of said tool holder turret so as to even allow implementation and control of the auxiliary spindle by a tool holder turret in case such do not contain an internal drive. Equally, the auxiliary spindle itself may include an implemented drive and may be configured, for example by a wireless signal transmission system generated between the auxiliary spindle and the tool holder turret, to receive and realize process commands send by the tool holder turret system, leading to a high adaptability and integrability of the auxiliary spindle for any given tool holder turret type. Accordingly, with the given features of the auxiliary spindle, both a maximal customizability of the auxiliary spindle as well as a precise and highly-reliable control of the clamped workpiece can be realized.

Furthermore, regarding the fixation of the clamped workpiece on the auxiliary spindle, the respective spindle unit may contain, integrated in the receiving unit or in addition to it, at least one clamping construction specifically designed to retain a workpiece on the auxiliary spindle. On that account, the receiving unit may, for example, include an adjustable sleeve which can be controlled by the above mentioned tool turret system or any other control element to tightly hold a workpiece when inserted in it. Here, clamping may be generated by mechanically tightening the above-mentioned sleeve, e.g. by an axial joint wrench, or by electrically, hydraulically or pneumatically adjusting its radius such that the inner surface of the sleeve contacts the inserted workpiece and ensures zero-play for subsequent machining operations of the latter, enabling precise processing steps within the tool holder turrets. Additionally, to further improve the accuracy of the workpiece machining, the sleeve may be also orientated in a way to automatically align a clamped workpiece coaxially to the aforementioned auxiliary spindle axis, thus prohibiting imbalances during work piece rotation and with it, wear out and imprecisions within the respective machining elements.

Moreover, instead of the above-mentioned sleeve or in addition to it, the receiving unit may further preferably include a chuck mechanism comprising at least a chuck for clamping the workpiece to be machined. More specifically, the chuck to be used for clamping may be a self-centered chuck or a collet and include a number of independently controllable jaws so as to firmly hold even irregularly shaped workpieces, thus further improving the accessibility of the auxiliary spindle for different machining processes. In addition, in accordance with the aforementioned sleeve, also the herein-described chuck mechanism may be configured to align the workpiece coaxially to the auxiliary spindle axis, for instance by adjusting its jaws respectively, so that subsequent machining can be likewise performed under high-performance conditions.

Moreover, apart from the clamping mechanisms described above, naturally also other ways of tightly fixating a workpiece onto the spindle unit may be applicable including using workpiece gripper mechanisms, electro-magnetical free-wheel fixation or simple wedge pinning processes. Likewise, any of the above-mentioned mechanisms may be preferably built as a standalone clamping element into the spindle unit or as an additional, exchangeable supplementary tool for holding a respective workpiece within the auxiliary spindle, resulting in the best possible adaptation of the respective auxiliary spindle for the corresponding workpiece to be machined.

In addition, the auxiliary spindle of the present invention may also be configured to organize the clamped workpiece in a way such that, for the respective lathe it shall be used for, a most efficient machining on the tool holder turret can be achieved. For instance, the receiving unit of the auxiliary spindle may preferably be built tubular or as any other kind of hollow form aligned to the auxiliary spindle axis of the auxiliary spindle and fitting to the respective geometry of the workpiece to be clamped, resulting in the possibility to generate a contact point for clamping at any given location on the workpiece. Consequentially, in addition to the limited workpiece orientation possibilities known from conventional workpiece holder elements, such as a working spindle, the receiving unit of the present invention may provide an improved spectrum of ways how to align a workpiece for machining.

In a preferred embodiment, for example, the receiving unit may be additionally configured to clamp the workpiece at at least one contact point, e.g. in the center of the workpiece, such that at least two opposing ends of the clamped workpiece remain exposed, thus enabling independent machining at at least two sides at the same time. On the other hand, due to the beneficial structure of the receiving unit mentioned above, the receiving unit may additionally also comprise at least two different clamping sides spaced apart, wherein each side can be configured to clamp a workpiece, e.g. by the clamping mechanisms described afore, generating the possibility to receive and machine at least two separated workpieces in the auxiliary spindle simultaneously. Accordingly, apart from the common and limiting clamping methods known from ordinary workpiece holders, the auxiliary spindle of the present invention provides a multitude of capabilities of how to align and process a clamped workpiece received for machining, leading again to an improved adaptability of the auxiliary spindle for the specific machining process that shall be applied.

Additionally, further features of the auxiliary spindle may be described as follows. In addition to the rotation of the auxiliary spindle using the external tool turret drive mentioned above, the auxiliary spindle may likewise include at least a rotation element, for example a bearing, such as a plan bearing, a ball bearing, a magnetic bearing or a fluid bearing, capable of rotating the at least one clamped workpiece along the auxiliary spindle axis independent from the aforementioned driving system of the corresponding tool holder turret. Here, the rotation element may be, for example, built around the clamped workpiece or may at least be connected to the receiving unit connecting the workpiece with the auxiliary spindle so that by rotation of the rotation element, the clamped workpiece can be rotated coaxially while, at the same time, being detached from the driving system of the respective tool holder turret. Accordingly, by the given rotation element an additional possibility to drive the rotation of the workpiece can be provided by being able to rotate the workpiece, e.g. by an external drive, independent from the driving system of connected tool holder turret, thus enabling a more precise and/or controlled movement of the workpiece as (potentially) possible by the tool holder turret itself.

Accordingly, to alternate between the so emergent driving possibilities, the auxiliary spindle may preferentially further include also an additional switching unit which is at least configured to change and define the main drive used for rotating the clamped workpiece within the auxiliary spindle. Generally, for this, said switching unit may for example be configured to change the state of the spindle unit between an 'active state' enabling an active rotation of the clamped workpiece by the aforementioned driving system of any tool holder turret and an 'idle state' enabling free rotation of the workpiece by means of the above stated rotation element (thus independent from the driving system of the tool holder turret). Here, switching between these states may be realized by e.g. mechanically fixating/releasing the rotational movement of the rotation element or coupling/decoupling the auxiliary spindle from the drive connected to the driving system of the respective tool holder turret. Likewise, in a preferred embodiment, the switching unit may be also configured to enable and/or prohibit both of the states at the same time, so that e.g. for cutting processes a firm, immobile positioning of the clamped workpiece can be realized (both states 'off') while, at the same time, in case additional rotation power is needed, the rotational movement driven by the driving system of the tool holder turret may be supplemented by an external drive by means of the rotation element (both states 'on').

On that account, with the auxiliary spindle implemented in the machining system of the claimed invention, a highly adaptable machining element is provided that enables both, a firm und functional juncture to a tool holder turret of a given lathe as well as a precisely controllable positioning of at least one work piece, by means of clamping, for machining processes on said tool holder turret. More so, since by the aforementioned clamping and orientation mechanisms provided by the auxiliary spindle machining of the workpiece can be particularly customized to the specific requirements needed for workpiece processing while, simultaneously, the implemented receiving unit allows for multiple machining steps at the same time, the additional machining possibilities enabled by the auxiliary spindle may dramatically improve the efficiency as well as workspace-utilization of any appropriate lathe.

Accordingly, to further underline the benefits of the aforementioned elements, the technical features of a machine system of the present invention including the above-stated auxiliary spindle shall be emphasized hereinafter.

Generally, a machining system involving the features of the claimed invention for machining at least one workpiece on a tool holder turret of a lathe, may preferentially comprise at least one tool holder turret of any type capable of mounting a number of tools on at least one tool turret port as already referenced above as well as at least one of the aforementioned auxiliary spindles mounted onto the at least one tool holder turret or any other tool holder turret implemented in the respective machining system. Consequently, the herewith described machining system may imply a conventional turret lathe as commonly known for drilling, cutting or any other kind of machining strategies, yet may be likewise implemented in other tooling machines capable to integrate tool holder turrets, such as drill presses, hobbing machines or shapers. Likewise, due to the well-defined control of the workpiece within the auxiliary spindle, the machining system of the claimed invention may be applicable for both, stationary as well as live-tooling processes, in particular CNC-driven tooling and may comprise at least a semi- if not even full-automatic control system to control the respective machining elements.

Therein, one feature of the claimed machining system, as already stated above, may be seen in providing a firm and precise machining of a workpiece on at least the one tool holder turret implemented within the tooling machine and by means of the aforementioned auxiliary spindle. Here, 'machining' in this context may similarly refer to any known processing of a clamped workpiece and thus may refer for example to milling, chucking, drilling or any other way of precisely processing a respective workpiece.

Accordingly, to define the minimal requirements of the claimed machining system, said machining system may at least be configured to position a workpiece via the auxiliary spindle on a corresponding tool holder turret. Hence, the machining system of the present embodiment may be configured to at least fixate the received (i.e. clamped) workpiece on a predefined position so that machining on the tool holder turret (and thus its related benefits) can be realized.

Based on the properties of the auxiliary spindle described above, the machining system may preferentially be configured to additionally rotate the clamped workpiece on the receiving unit of the auxiliary spindle along at least one auxiliary spindle axis so that dynamic cutting processes, such as milling or drilling, may be applicable without requiring additional rotation drives for a respective machining tool. Here, as mentioned earlier, rotation of the workpiece by the machining system may be realized by coupling the auxiliary spindle, particularly the spindle unit, to the driving system of the tool holder turret such that rotation of the spindle (and thus of the clamped working piece) can be precisely adjusted. More specifically, as by connecting the auxiliary spindle to an internal drive, such as a motor, of the tool holder turret, the rotation of the workpiece may be for example originated by a torque generated by the aforementioned drive and transmitted to the respective auxiliary spindle so as to promptly alternate the rotational properties of the workpiece in case of need (e.g. when changing the machining process or using another tool).

Furthermore, for machining a clamped workpiece within the present invention, the workpiece clamped in the claimed machining system may be at least allowed to interact with a machining tool similarly existent in the machining system. On that account, the machining system may further be at least configured to machine a workpiece clamped in the receiving unit of the auxiliary spindle by at least one machining tool mounted onto one of the tool holder turrets of the machining system and/or at least one machining tool mounted onto a main spindle such that processing of the respective workpiece, in particular by the aid of live tooling, can be realized. In doing so, machining may be performed sequentially using a tool provided by at least one tool holder turret or a main spindle of the machining system or may be conducted by a number of machining tools attached to the same or different mount at the same time, thus enabling a maximal efficient processing of the workpiece on the tool holder turret. Additionally, since, as mentioned above, the auxiliary spindle is configured to expose a multitude of machining areas of the workpiece (or even multiple workpieces) for machining, the processing time within a tooling machine such as a lathe can be vastly improved.

Accordingly, with the given machining system being capable of additionally position and process a respective workpiece on a tool holder turret, a greatly enhanced machining process can be realized that, separately or in conjunction with the machining conventionally conducted at a main spindle of a respective tooling machine, can lead to a faster, more precise and, above all, highly adaptable processing of one or more workpieces. Furthermore, as it will be described hereinafter, by the large degree of freedom normally implied with a given tool holder turret of a tooling machine, particularly of a lathe, the claimed machining system may also enable a far more extensive interplay between machining elements, ultimately leading to considerably more complex and cooperative machining steps than comparable tooling machines can carry out.

On that account, the machining system of the claimed invention may be, as a basis, also configured to adjust the position of a workpiece clamped into the receiving unit of a respective auxiliary spindle and/or the direction of its corresponding auxiliary spindle axis by at least moving the tool holder turret the auxiliary spindle is mounted onto along an individual turret axis and/or performing a translational movement along any three-dimensional axis, e.g. by using guide-rails similarly implemented into the machining system. Therefore, precise allocation of the clamped workpiece towards any given machining tool can be realized by solely utilizing a guidance system already existing in conventional tooling machines (e.g. for controlling the tool position), thus circumventing the implementation of additional drives and reducing the potential cost of the system. Furthermore, based on the so generated degrees of freedom of the clamped workpiece, various machining steps can be developed that mayfurther enable more sophisticated and complex interactions between implemented machining elements so as to even further improve the tool processing within the tooling machine.

On the one hand, for example, based on the above-mentioned possibility to dynamically control the position of the clamped workpiece, transfer processes between at least the tool holding turret mounting the auxiliary spindle the workpiece is clamped onto and the main spindle, or in general any working spindle, of the machining system may be conducted. Accordingly, the machining system may be configured to transfer a clamped workpiece from at least one main spindle of the machining system to the tool holder turret via the at least one auxiliary spindle mounted onto said tool holder turret and/or transfer it back from the tool holder turret to the at least one main spindle respectively, enabling sequential machining processes at different positions of the tooling machine by consecutively passing a workpiece to predefined machining areas. Here, said transfer processes may be for example realized by initially approaching a workpiece (e.g. fixated by a fixation element of a main spindle) by the auxiliary spindle and clamping it via the clamping mechanism implemented in its receiving unit. At that, the main spindle may be configured, in the next step, to loosen its grip, e.g. by receiving a corresponding command from the auxiliary spindle via a transmitter/receiver connection built in these two elements or by an automated machining protocol such as commonly implemented in for example CNC-lathes, finally accomplishing the transfer between both spindles. Further, the same mechanism may be conducted reversely so as to hand over a workpiece clamped by a respective auxiliary spindle.

On the other hand, the transfer of a workpiece does not need to be limited between an auxiliary spindle and a main spindle per se. Conversely, the machining system of the claimed invention may likewise contain at least two or more tool holding turrets onto which each, respectively, at least one auxiliary spindle are mounted and between which a workpiece can be transferred. Correspondingly, said machining system may, in preferred embodiments, also include at least a first and a second tool holder turret on which at least a first and a second auxiliary spindle are respectively mounted onto, wherein the machining system, equivalent to the aforementioned interactions between the main spindle and the auxiliary spindle, may be, by the movement of the at least two tool holder turrets, configured to transfer a workpiece from one of the tool holder turrets (e.g. from the receiving unit of the first auxiliary spindle) to the other one (e.g. to the receiving unit of the second auxiliary spindle). Consequently, by the given machining system, a respective workpiece can be generally transferred to any given working area reachable by a main or auxiliary spindle, thus enabling both, a redistribution of the workpiece throughout the entire tooling machine, allowing for multiple, locally distinguishable machining areas independent from the limited accessibility of a main spindle, as well as a dynamic and adaptable machining circulation of the workpiece facilitating the generation of rapid production lines within the respective tooling machine. Accordingly, compared to conventional tooling machines, a faster, more efficient and, above all, space-saving machining process can be realized.

Moreover, despite the benefits originating from the aforementioned redistribution of the work piece for machining operations in the machining system of the present invention, it again has to be emphasized that the corresponding invention does not just involve implementing an additional workpiece holder into tooling machine such as a lathe, but rather is based on the effects of utilizing already existing tool holder turrets to position and allocate a respective workpiece for machining by means of the auxiliary spindle. Accordingly, in contrast to common tooling machines comprising several fixation elements to firmly position a workpiece for machining operations (e.g. several working spindles implemented into a lathe), the workpiece holder in the claimed invention does not occupy additional space or requires an individual driving system, but operates on yet present elements normally used to control the tools for machining the workpiece (i.e. the at least one tool holder turret). Consequently, as a fundamental difference between the machining system of the claimed invention and such of common tooling machines, a tool holder turret of the machining system of the claimed invention may gain a hybrid status, thus may be configured to mount both, at least one auxiliary spindle for positioning and controlling a workpiece as well as at least one additional machining tool capable of machining a respective work piece.

On that account, it is similarly evident that due to this hybrid status, at least said tool holder turret mounting the at least one auxiliary spindle may be configured to both, positioning and controlling a clamped workpiece on the receiving unit of the auxiliary spindle for machining operations on said tool holder turret as well as positioning the at least one mounted machiningtool for machining the respective workpiece (or any other workpiece available in the machining system) as well, originating a dual function for any tool holder turret mounting at least one auxiliary spindle.

Here, this dual functions may again lead to several benefits exploitable by the machining system of the present invention. Due to the ability to mount both, a clamped workpiece by means of the auxiliary spindle as well as a compatible machining tool, for example, the tool holder turret within the machining system of the claimed invention may be configured to simultaneously control the at least one machining tool for processing a workpiece (e.g. at a working spindle) while, at the same time, steer and position another workpiece clamped on the receiving unit of the of the auxiliary spindle for a secondary machining operation, thus, again, enabling multiple processing steps simultaneously. At it, the at least one machining tool mounted on a respective tool holder turret of the present invention may be either configured to only process a workpiece positioned outside its respective tool holder turret or may be similarly capable, e.g. by a customizable adjustment element such as internal guiding rails, to machine a workpiece mounted on the same tool holder turret so as to even allow machining processes that are completely independent from any external machining element (e.g. a working spindle or another tool holder turret). A tool holder turret implemented in the machining system of the present invention may preferably also include a plurality of mounted machining tools that may be controlled independently or at least consecutively for machining operations realizing an even faster processing of a respective workpiece.

Moreover, in a particularly preferable embodiment, at least one tool holder turret of the claimed machining system may likewise be configured to mount, in addition to the at least one machining tool, also at least two or more auxiliary spindles capable of individually clamping at least one workpiece for machining processes. Consequently, similar to the aforementioned case in which a tool holder turret may contain a plurality of machining tools, the machining system of the claimed invention may be also configured, by the at least one respective tool holder turret, to independently position and control a plurality of workpieces clamped onto the auxiliary spindles existent within the system. On that account, machining of these workpieces may be likewise performed individually and/or consecutively so that the machining system may be configured to independently machine each of the clamped workpieces within the auxiliary spindles by at least one machining tool clamped into an existing main spindle and/or at least one machining tool mounted onto one of the tool holder turrets of the machining system. Furthermore, machining of each of the clamped workpieces may again be performed simultaneously and/or temporally distinguished allowing for a maximal adaptability of the respective machining system for any given machining operation.

An additional benefit of the machining system of the claimed invention may also arise from the possibility of decoupling the rotational movement of a clamped movement by means of the rotation element implemented within the receiving unit of the auxiliary spindle described above. More specifically, as by the aforementioned rotation element of the auxiliary spindle, a rotational movement of the workpiece independent from the internal drive of the respective tool holder turret may be possible, the machining system of the claimed invention may additionally include at least one rotation tool mounted on one of the tool holder turrets of the system which is configured to externally and/or supplementary drive the rotation of the clamped workpiece along the auxiliary spindle axis. Here, in order to achieve this, the rotation tool may comprise a fastening element, such as a dynamic clamp, a chuck or any other object capable of firmly holding a respective workpiece, and the machining system may be configured to physically connect said rotation tool to the respective clamped workpiece by the aid of such fastening element. Further, supplementary rotation of the clamped workpiece may then be originated by the rotation tool by, for example, generating an additional torque transmitted via the fastening element to the clamped workpiece so that either by the rotation alone or in conformity with the drive generated by the internal driving system of the respective tool holder turret, the rotation of the corresponding workpiece may be controlled. Accordingly, by the rotation tool mounted on at least one of the tool holder turrets implemented in the machining system, an improved control of a workpiece can be realized by both supplementing additional rotational power in case of need as well as further stabilizing the workpiece during rotation by means of additional contact areas generated by the fastening element.

As a consequence, it is shown that the machining system of the claimed invention may comprise a multitude of benefits compared to machining operations commonly used in tooling machines, such as a lathe. More precisely, by the possibility to additionally mount, by means of the auxiliary spinde, at least one workpiece to a tool holder turret of a machining system for additional workpiece processing on said tool holder turret, more efficient, cooperative and faster machining strategies can be implemented which would not be possible by any conventional tooling machines. Additionally, due to the above mentioned machining system, a plurality of machining methods can be originated which neither can be provided nor conducted by conventional tooling machines.

Here, these machining methods may comprise at least the steps of, on a tool holder turret of the above mentioned machining system, clamping at least one workpiece by the receiving unit of the auxiliary spindle as well as rotating the clamped workpiece along an auxiliary spindle axis for machining the clamped workpiece.

Further, the machining methods may also include
- machining the clamped workpiece on the respective tool holder turret by at least one tool mounted onto the at least one tool holder turret and/or a tool mounted onto a main spindle implemented in the machining system as well as
- pivoting the clamped workpiece, by rotating the tool holder turret the respective auxiliary spindle is mounted onto, along a turret axis and/or moving the clamped workpiece by translatory moving said tool holder turret in at least one of three directions so as to precisely allocate the workpiece for machining operations;
- coupling the auxiliary spindle to the driving system of the too holder turret by at least mechanically connecting the auxiliary spindle to a tool turret port of the tool holder turret and
- driving the rotation of such clamped workpiece by a torque generated by a drive of the so coupled tool holder turret;
- transferring the clamped workpiece from a first auxiliary spindle to a main spindle of the machining system and/or vice versa and
- transferring the clamped workpiece from a first auxiliary spindle to a second auxiliary spindle mounted to the same or a different tool holder turret as the first auxiliary spindle;
- machining the clamped workpiece on the at least one auxiliary spindle mounted onto the tool holder turret at at least two opposing sides of the clamped workpiece by the aid of the receiving unit;
- sequentially machining a workpiece on at least one tool holder turret by allocating the clamped workpiece to a number of machining tools and/or additional auxiliary spindles;
- driving at least one machine tool mounted on the tool holder turret while, at the same time, having at least one workpiece clamped on the tool holder turret of the machining system; and
- connecting the clamped workpiece with at least one rotation tool of the same or different tool holder turret the auxiliary spindle clamping the workpiece is mounted onto and/or driving the rotation of the clamped workpiece externally by a torque generated by the at least one rotation tool.

In addition, since, as mentioned before, the machining system may be likewise configured to automatically or at least semi-automatically perform any of the above stated features, the present invention may also relate to a computer program product, e.g. realized by an internal processor unit coupled to the driving system of the claimed machining system, comprising instructions to cause the machining system to execute at least any of the aforementioned machining steps.

Furthermore, those skilled in the art will appreciate that various adaptations, modifications, and/or combinations of the just described aspects can be configured. Therefore, it is to be understood that, further aspects may be practiced other than as specifically described herein. Those skilled in the art will also appreciate, in view of this disclose, that different aspects described herein may be combined to form other aspects of the present disclosure.

### BRIEF DESCRIPTION OF THE DRAWINGS

- **Fig. 1**: exemplary illustrates a schematic framework of a multi-spindle lathe having a number of tool holder turrets arranged around the working spindles useful for understanding the invention;
- **Fig. 2a**: exemplary illustrates a conventional setup of a lathe comprising one horizontally aligned main spindle and a tool holder turret:
- **Fig. 2b**: exemplary illustrates a conventional setup of a lathe comprising a vertically aligned main spindle and two tool holder turrets;
- **Fig. 3a**: exemplary illustrates a conventional setup of a lathe comprising a main spindle having a continuous cavity structure and two tool holder turrets;
- **Fig. 3b**: exemplary illustrates an embodiment of the machining system of the present invention consisting of an auxiliary spindle mounted onto a tool holder turrets and two machining tools mounted on a tool holder turret and a working spindle respectively;
- **Fig. 4a**: exemplary illustrates another embodiment of the claimed machining system consisting of an auxiliary spindle of a second kind mounted onto a tool holder turrets, a machining tool mounted in a second tool holder turret and two main spindles;
- **Fig. 4b**: exemplary illustrates the machining system of Fig. 4b with the machining tool processing the clamped workpiece of the auxiliary spindle from another side;
- **Fig. 5a**: exemplary illustrates an embodiment of the claimed machining system consisting of two auxiliary spindles respectively mounted onto a tool holder turret and two tool holder turrets mounting a machining tool;
- **Fig. 5b**: exemplary illustrates an embodiment of the claimed machining system consisting of two auxiliary spindles respectively mounted onto a tool holder turrets and a machining tool capable of processing two workpieces simultaneously;
- **Fig. 6a**: exemplary illustrates potential machining operations of a workpiece clamped onto an auxiliary spindle using machining tools mounted onto a tool holder turret;
- **Fig. 6b**: exemplary illustrates potential machining operations of a workpiece clamped onto an auxiliary spindle using machining tools mounted onto fixated objects;
- **Fig. 7a**: exemplary illustrates an embodiment of the claimed machining system consisting of an auxiliary spindles and two rotation tools respectively mounted onto a tool holder turret, wherein a first rotation tool is driving the rotation of a clamped workpiece of the auxiliary spindle externally;
- **Fig. 7b**: exemplary illustrates the machining system of Fig. 7a wherein the second rotation tool is driving the rotation of the clamped workpiece externally;
- **Fig. 8a**: exemplary illustrates an embodiment of the claimed machining system consisting of a tool holder turret mounting two auxiliary spindles at the same time;
- **Fig. 8b**: exemplary illustrates a cross-section perspective of the tool holder turret of Fig. 8a mounting two auxiliary spindles;
- **Fig. 8c**: exemplary illustrates a cross-section perspective of a tool holder turret mounting three auxiliary spindles;
- **Fig. 9a**: exemplary illustrates a cross-section perspective of a tool holder turret holding a raw workpiece and a pre-machined workpiece via two auxiliary spindles of the second kind;
- **Fig. 9b**: exemplary illustrates a machining mechanism utilizing the tool holder turrets of Fig. 9a and Fig. 9c;
- **Fig. 9c**: exemplary illustrates a cross-section perspective of a tool holder turret holding a pre-machined workpiece and a finished workpiece via two auxiliary spindles of the second kind;
- **Fig. 10**: exemplary illustrates a cross-section perspective of an embodiment of the clamping mechanism of the receiving unit for mechanically clamping a workpiece onto the auxiliary spindle;
- **Fig. 11**: exemplary illustrates a cross-section perspective of a second embodiment of a clamping mechanism of the receiving unit for mechanically clamping a workpiece onto the auxiliary spindle;

### DETAILED DESCRIPTION OF THE DRAWINGS AND DESCRIPTION OF EXEMPLARY EMBODIMENTS

In the following, preferred aspects and embodiments will be described in more detail with reference to the accompanying figures. Same or similar features in different drawings and embodiments are referred to be similar reference numerals. It is to be understood that the detailed description below relating to various preferred aspects and preferred embodiments are not meant as limiting the scope of the present invention.

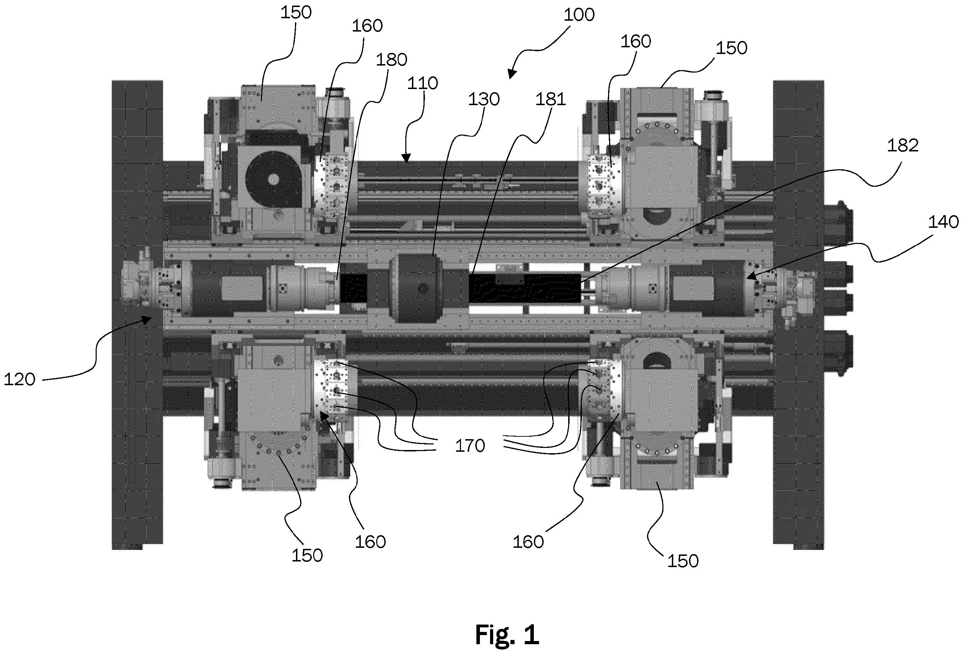

Figure 1 shows an exemplary configuration of a tooling machine 100, in particular a vertical orientated (in relation to the work floor) lathe, useful for understanding the present invention. Specifically, the tooling machine 100 shown in this figure comprises a framework 110 holding at least a main spindle 120 on the left side of the tooling machine, a counter spindle 140 on the right side as well as an intermediate spindle element 130 in the center of the frame work 110 configured to clamp and position a workpiece W into a respective clamping element 180 - 182 for machining operations. Further, above and below said spindle devices 120, 130 and 140 the framework 110 additionally includes a number of turret carrier sides 150 onto which, individually, a tool holder turret 160 comprising a rotatable turret head with a number of tool turret ports 170 for mounting machining tools T onto the tool turret head, is mounted.

Accordingly, machining of a workpiece W in the shown tooling machine 100 is processed by implementing a workpiece W in one of the aforementioned spindle elements 120, 130 or 140 and approaching it with one or more machining tools T implemented in the respective tool holder turrets 160. For doing so, both, the spindle elements 120, 130 and 140 as well as the tool holder turrets 160 are constructed to at least move horizontally (in relation to the work floor) by the aid of horizontally aligned guiding rails 190 and may reduce the distance between a respective machining tool T and the clamped workpiece W by additionally driving the tool turret head the machining tool is mounted onto along a vertically aligned (in relation to the work floor) guidance system 191 implemented in each tool holder turret 160. Additionally, the direction of the clamped machining tool T can be adjusted by pivoting the tool T along a horizontal turret head axis generated by the rotation of the corresponding tool turret head. Consequently, by the tooling machine 100 of the prior art, a sufficient machining process of a workpiece positioned in one of the spindle elements 120, 130 or 140 can be conducted. Equally, however, it also becomes evident that for this type of tooling machine 100 shown in Fig. 1, the actual working space for machining said workpiece W remains rather limited and is generally confined due to the small accessible area in front of a spindle element 120,130 or 140. Furthermore, since a majority of the tooling machines space is conventionally occupied for the adjustment of the machining tools T mounted onto the tool holder turrets 150, also the number of workpieces W that can be processed at the same time becomes restricted, leading to a rather inefficient machining process in terms of workspace utilization.

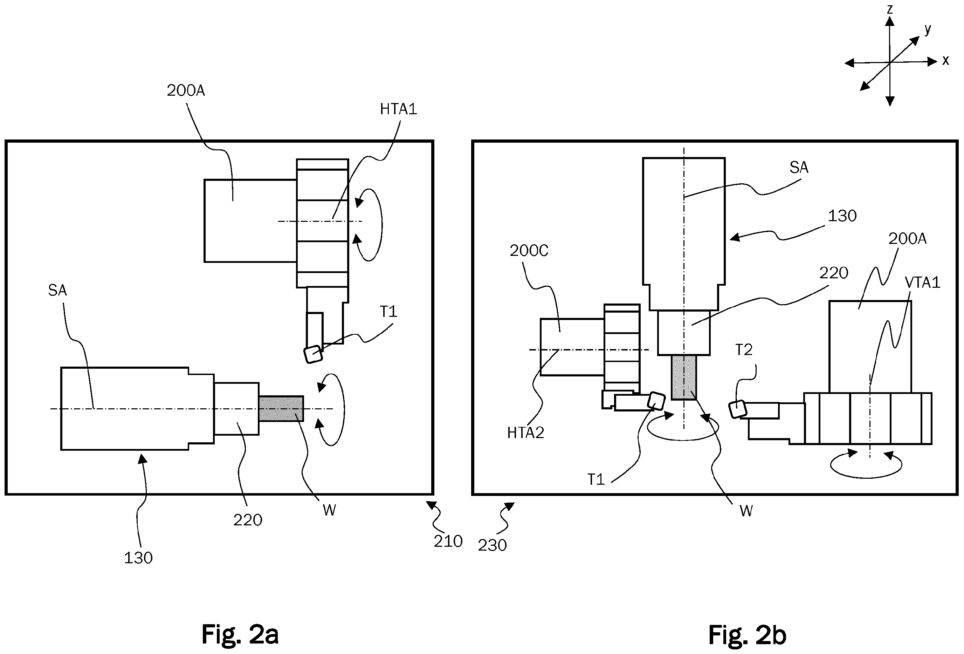

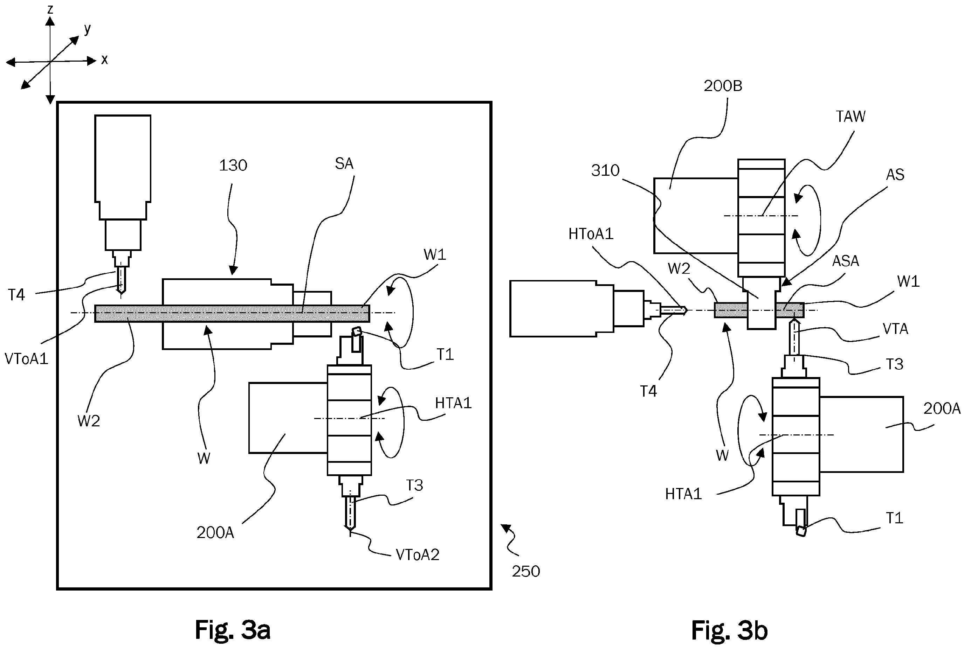

Figure 2a, 2b and 3a, in which additional setup designs, further emphasize the above mentioned problem. Figure 2a shows a layout of a most simplified version of a common vertical lathe (in relation to the work floor) comprising at least a horizontally aligned intermediate spindle element 130 that is able clamp and rotate a received workpiece W along a spindle axis SA by means of a clamping element 220 as well as a tool holder turret 200A that mounts at least one machining tool T1 and is able to both, translationally move said tool T1 in three directions as well as pivot the tool along a horizontal turret axis HTA1 for machining the clamped workpiece W.

In comparison, in Figure 2b a more sophisticated lathe 230 is shown, presenting a vertical lathe 230 with an intermediate spindle element 130 aligned vertically and centrally positioned between two too holder turrets 200A and 200C containing at least a vertical turret axis VTA1 (in relation to the work floor) and a horizontal turret axis HTA2 (in relation to the work floor) for rotational movement of the mounted machining tools T1 and T2 respectively. Accordingly, since in this system, by means of the two machining tools T provided by the tool holder turrets 200A and 200C, the clamped workpiece W of the main spindle MS can be processed from two sides simultaneously, a faster machining process can be achieved.

Finally, Figure 3a shows a third possibility of constructing a lathe 250 similar to those shown in Figure 2a and 2b, in which, unlike the aforementioned systems, the intermediate spindle element 130 is designed as a continuous passageway enabling the insertion of a workpiece W so that both sides W1 and W2 of the workpiece W can be machined at the same time. On that account, conventional lathes using this type of intermediate spindle element 130 normally consist of several tool holder turrets and/or tool spindles so as to utilize on the additional machining areas released by this kind of spindle element 130. Accordingly, also in this embodiment, the respective lathe includes a plurality of tool holders, particularly a tool spindle capable of rotating a machining tool T4 around a vertical tool axis VToA1 as well as a tool holder turret 200A mounting at least two additional machining tools T1 and T3 and being able to pivot said tools T1 and T3 along a horizontal turret axis HTA1 while, at the same time, enabling at least the rotation of machining tool T3 around a vertical tool axis VToA2, e.g. for drill machining.

Hence, extracting the main principle of all these tooling machines shown in the aforementioned machining systems, it becomes dominant that, independent from the framework and elements used in each of the lathes shown above, centralization of a workpiece W by means of a spindle element placed amidst a number of tool holding elements appears to be a central feature shared by many tooling machines, logically so as to maximize the accessibility of said workpiece W for as many machining tools T as possible. Conversely, however, in exchange for this specific advantage gained by building the tooling machinery around a specific workpiece holder, the disadvantage of compromising the actual area for potentially processing a workpiece W to a comparably small section of the lathe becomes likewise apparent. In other words, since common tooling machines are usually constructed to provide maximal moving space for implemented tool elements, such as tool holder turrets, so as to improve the number of tools usable at a distinct working spindle, potential workspace within said tooling machine is normally not used for machining a workpiece W but rather to enable efficient allocation of a respective tool, resulting in an inefficiency of the tooling machine in terms of workspace utilization. Additionally, due to this reason, the number of workpieces W that can be processes at the same time is similarly limited.

On this account, the present invention aims to solve the above stated problem by using the tool holder turrets 200A - 200D of a tooling machine as additional working spaces for machining a workpiece W by means of the aforementioned auxiliary spindle AS. Here, Figure 3b, which shows a first embodiment of a machining system using said auxiliary spindle AS and which can be directly related to the tooling machine of the prior art shown in Figure 3a, may further underline the benefits entailed with the claimed invention. Accordingly, Figure 3b shows a tooling machine, in particular a lathe, that despite or in addition to the main spindle MS shown in Figure 3a, utilizes the aforementioned auxiliary spindle AS mounted on a tool holder turret 200B similarly positioned in the tooling machine. Herein, the auxiliary spindle AS shown in the respective embodiment is ment to be connected to the tool holder turret 200B by firmly (e.g. mechanically, electrically or hydraulically) mounting a section of the auxiliary spindle AS, the spindle unit 310, to a turret port of the tool holder turret 200B normally used to fixate a tool holder to the tool holder turret 200B. Furthermore, in this embodiment, the auxiliary spindle AS is shown to clamp a workpiece W via a receiving unit integrated in the auxiliary spindle AS such that both, two opposing ends W1 and W2 of the workpiece W are exposed for machining as well as the workpiece W can be rotated at least along an horizontally aligned auxiliary spindle axis ASA defined by the internal structure of the auxiliary spindle AS. On that account, by the aforementioned setup described for the auxiliary spindle AS shown in Figure 3b, machining operations on the tool holder turret 200B equivalent or even more efficient to such performed at an intermediate spindle element 130, for example shown in Figure 3a, can be conducted.

Here, a major benefit of machining a workpiece W on a tool holder turret 200B by means of the auxiliary spindle AS may, for instance, originate from the additional degrees of freedom entailed when clamping a workpiece W on a tool holder turret 200B. In comparison to common tooling machines only consisting of a central placed workpiece holder, such as a main spindle MS for example, workpieces W clamped via the claimed auxiliary spindle AS on a tool holder turret 200B may be freely transported and/or adjusted by the enhanced movement possibilities normally implied by a tool holder turret 200B, thus being provided a significantly larger workspace areal.

On that account, also in the machining system shown in Figure 3b, a precise machining of both sides W1 and W2 of the workpiece W can be achieved by accurately allocating said workpiece W to the machining tools T1, T3 and T4 integrated in an additional, horizontally aligned tool spindle as well as a second tool holder turret 200A respectively, using the internal driving mechanisms of the mounted tool holder turret 200B. More specifically, within this system, the position of the clamped workpiece W and/or the alignment of its auxiliary spindle axis ASA can be alternated by at least translationally moving the mounted tool holder turret 200B in three dimensions and/or pivoting the workpiece W along the turret axis TAW so that, in contrast to conventional tooling machines, the workpiece W can be, potentially, positioned at any location reachable by the tool holder turret 200B.

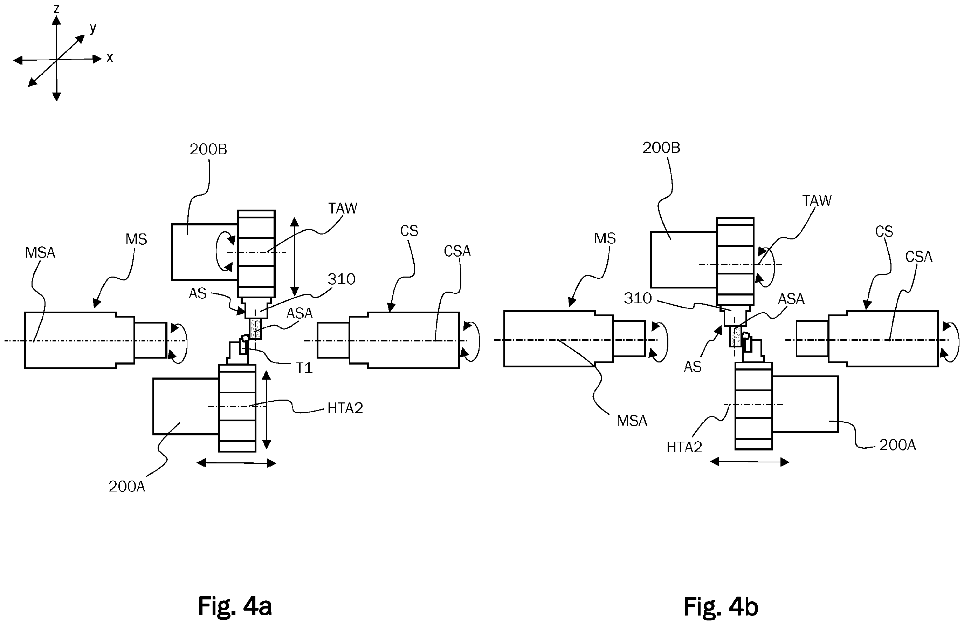

On that basis, Figures 4a and 4b shows another embodiment of a machining system of the claimed invention delineating a second version of the auxiliary spindle AS mounted on the tool holder turret 200B, in which the receiving unit is constructed in a way so as to reveal only one side of the workpiece W and rotatably align said workpiece W along an auxiliary spindle axis ASA perpendicular to the horizontal turret axis TAW of the mounted tool holder turret 200B. In that way, machining of the workpiece W may be improved by being able to adjust the auxiliary spindle axis ASA (and thus the tilting angle of the workpiece W) simply by rotating the tool holder turret 200B along the turret axis TAW, enabling a more simplified and accurate processing by machining tools such as delineated with T1.

Moreover, as can be seen in this embodiment of the machining system, adding an additional workpiece holder by means of the auxiliary spindle AS to a tool holder turret 200B of a regular tooling machine construct, e.g. consisting of a main spindle MS and a counter spindle CS including an individual main spindle axis MSA and a counter spindle axis CSA as well as two tool holder turrets 200A and 200B as shown in Figure 4a and 4b, may significantly increase the production rate of the tooling machine. Exemplarily, in this case, additional machining operations can be conducted even when processing on the main and counter spindles MS and CS experience down times. Even more, due to the cleared space originated from the missing workpieces W on the main and counter spindles MS and CS, more precise machining can be provided (e.g. both sides of the workpiece W, the left (Fig. 4a) and the right (Fig. 4b) side can approached by the machining tool T1) leading to both, a more time-efficient as well as sophisticated processing mechanism of the tooling machine. On that account, integration of an auxiliary spindle AS even into already existing tooling machines may be recommendable, enabling a potential upgrade of already existing machining operations.

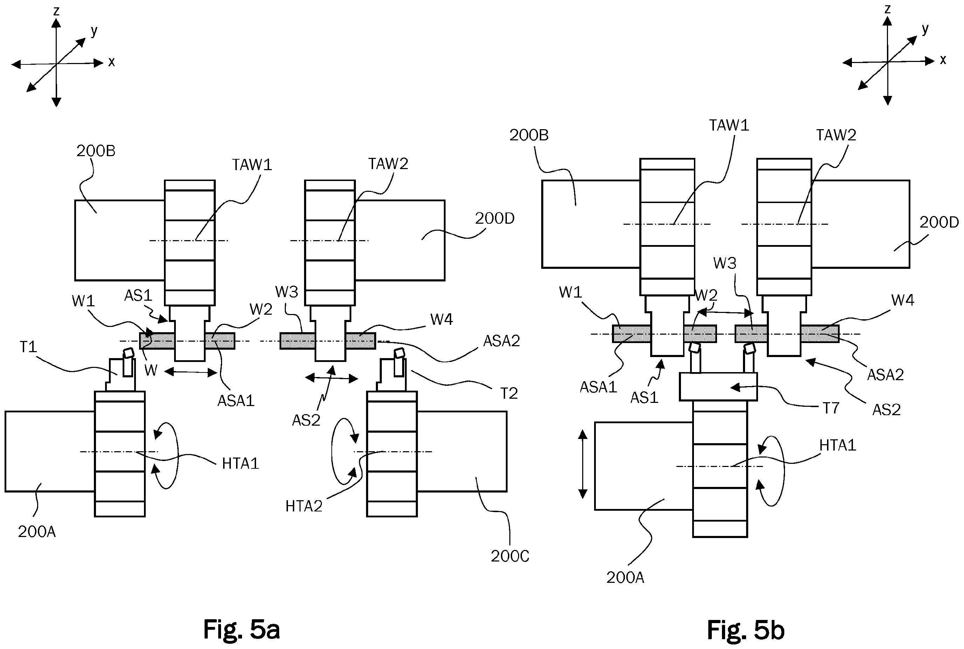

Figure 5a and 5b show further embodiments of the machining systems using the auxiliary spindle AS of the invention. Here, Figure 5a delineates a machining system including four tool holder turrets 200A - 200D equally distributed within the tooling machine wherein the tool holder turrets 200B and 200D, located above the tool holder turrets 200A and 200C, are mounting the auxiliary spindles AS1 and AS2 and respectively are able to adjust the position of said auxiliary spindles AS1 and AS2 by translationally moving in three directions and/or rotating along the turret axis TAW1 and TAW2. At it, the aforementioned auxiliary spindles AS1 and AS2 may belong to the same type of auxiliary spindle AS already shown in Figure 3b and correspondingly are clamping the two workpieces by their respective receiving units again in a way so that respectively two endings of the workpieces W1 and W2 as well as W3 and W4 are revealed for machining operations. Alternatively, both auxiliary spindles AS1 and AS2 can also be configured to individually clamp two workpieces, one from each exit side of the respective receiving unit so as to even further improve the machining process. In addition, the two tool holder turrets 200A and 200C positioned below are mounting at least one machining tool T1 and T2 pivotable by the horizontal turret axes HTA1 and HTA2.

Accordingly, within the embodiment shown in this figure, even more sophisticated machining operations can be performed on the tool holder turrets 200B and 200D of the respective machining system. Specifically, since with the given number of tool holder turrets 200A - 200D a plurality of independently movable machining elements are provided within the system, likewise consecutive or in parallel performed processing steps, i.e. capable of generating automatic productions lines solely produced on the tool holder turrets 200B, can be realized. On this account, the machining system shown in Figure 5a can be, for example, configured to drive the two tool holder turrets 200B and 200D in such a way that first each of the clamped workpieces is machined by one of the machining tools T1 and T2 separately while in a subsequent machining step both machining tool T1 and T2 are configured to process one workspace, for instance, on both sides W1 and W2 of the workpiece mounted onto tool holder turret 200B. Equally, even more complex machining operations involving any given number of turret, workpiece or machining tool movement could be operated by the given or any other of the herewith presented machining system.

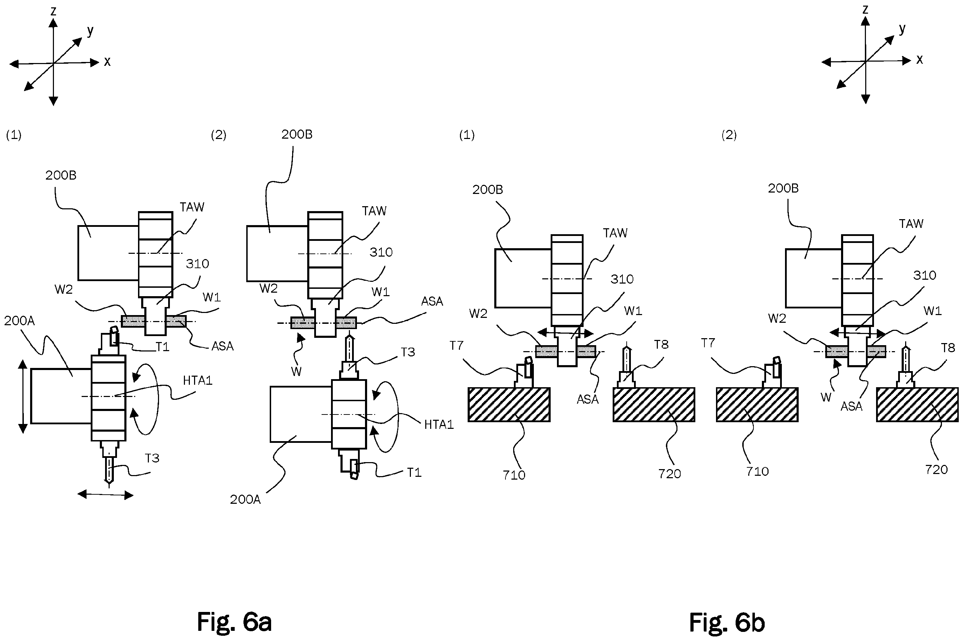

Furthermore, Figure 5b, 6a and 6b are showing more possibilities of potential processing steps used in machining systems of the claimed invention.

Figure 5b shows a machining system comprising, additional to the two tool holder turrets 200B and 200D mounting the workpieces already shown in Figure 5a, a modified machining tool T9 mounted on the previous tool holder turret 200A that consist of two separate machining parts used for machining two areas of a workpiece W or respectively two different workpieces W at the same time. Accordingly, within this embodiment, the machining system utilizing the at least two auxiliary spindles AS mounted onto two different tool holder turrets 200B and 200D as well as the aforementioned machining tool T9 is likewise capable of machining at least two different sides of a workpiece (e.g. W1 and W2) and/or even two different workpieces W synchronously using only one machining tool T9 mounted on a third tool holder turret 200A. Naturally, in alternative machine systems said machining tool T6 can be likewise fixated on a tool holder turret (e.g. 200B) equally mounting an auxiliary spindle AS or being capable of machining auxiliary spindles AS placed on the same or other tool holder turrets 200A - 200D. Likewise, the number of machining parts implemented in the machining tool T6 does not have to be limited but can also consist of any number.

Thus said machining tool T9 can likewise be able to machine any number of workpiece sides W1 - W4 or workpieces W simultaneously.

Figure 6a shows further exemplary machining mechanisms implementable in the machining system of the invention. Specifically, from Figure 6a (1) to Figure 6a (2) synchronous movement of both, a tool holder turret 200B mounting a workpiece W via the receiving unit 310 of the auxiliary spindle AS as well as a tool holder turret 200A holding two machining tools T1 and T2 on different turret ports, is displayed. In doing so, improvement of the machining operation on the tool holder turret 200B can be realized, for example, by switching the machining tool T1 or T3, by means of rotating the tool holder turret 200A around at least the horizontal turret axis HTA1 or moving the tool turret 200A translationally, in times of readjusting of the workpiece W (e.g. when agitating the tool holder turret 200B after finishing a respective machining step), thus enabling a more time-efficient and error-free machining operation. On that account, since the position of the respective workpiece W as well as its drive for rotation along the auxiliary spindle axis ASA can be intrinsically adjusted, e.g. by the aforementioned driving system implemented in the corresponding tool holder turret 200B, the above mentioned steps are not limited to any specific type of machining tools T, but rather can be implemented for any applicable machining step required for workpiece processing. Accordingly, machining on a tool holder turret 200A - 200D according to the claimed invention is generally applicable to any type of machining process or sequences of it.

Furthermore, it is to be noted that machining systems of the claimed invention are likewise not limited by utilizing machining tools T solely provided (i.e. mounted) on tool holder turrets 200A - 200D. Conversely, due to the enhanced mobility of a clamped workpiece W supplied by the drive system of its corresponding tool holder turret 200A - 200D, also any other type of tool holder may be sufficient to generate an appropriate machining mechanism.

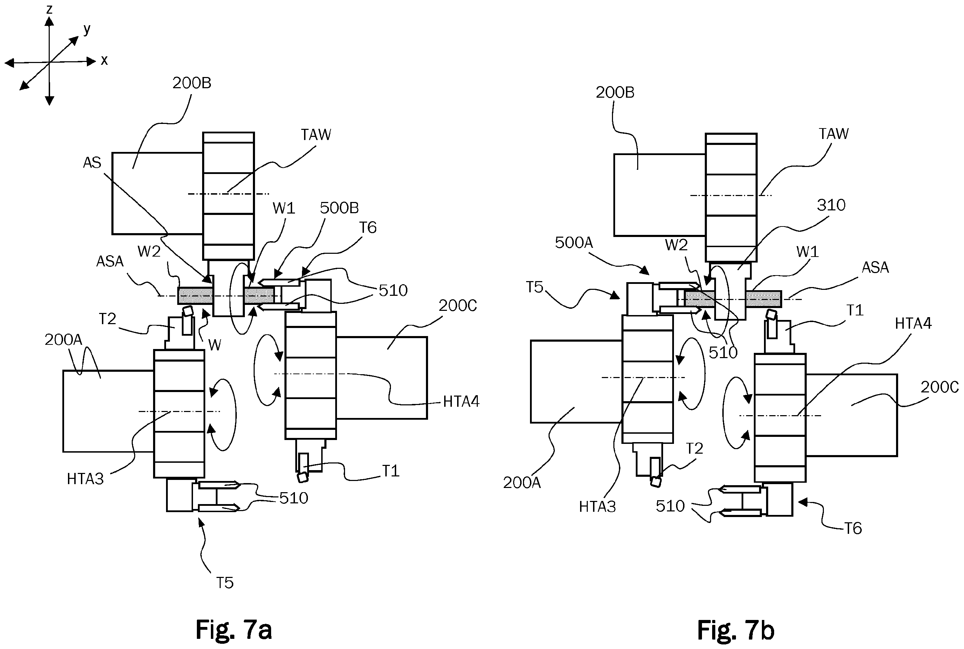

On that account, Figure 6b shows a machining system according to the claimed invention in which the machining tools T7 and T8 for machining any side W1 and W2 of the workpiece clamped into the auxiliary spindle AS are not mounted onto a tool holder turret 200A - 200D but solely fixated on stationary elements 710 and 720, such as a solid framework or a foothold. Accordingly, in such conditions, machining operations can still take place by allocating the respective working piece W, by means of driving the tool holder turret 220B the auxiliary spindle AS of the working piece W is mounted onto, to each of the fixated machining tools T7 and T8, thus providing efficient machining operations even in case of poorly accessible machining tools T7 and T8. Figure 7a and 7b shows another embodiment of the machining system of the invention and a specific machining step usable for process enhancement. Here, besides the tool holder turret 200B providing again a workpiece W via the receiving unit 310 of the auxiliary spindle AS, the machining system of this embodiment also includes two rotation tools T5 and T6 mounted on the tool holder turrets 200A and 200C and being capable of additionally rotate the workpiece W along the auxiliary spindle axis ASA. More specifically, to do this, said rotation tools T5 and T6 include the fastening elements 510 that may function as a chuck to firmly interconnect a rotation tool T5 or T6 with at least one end W1 or W2 of the clamped workpiece W to be processed and singlehandedly (or supplementary to an internal drive of the auxiliary spindle) propel the connected workpiece W by creating a torque (e.g. by rotating its body) aligned along the auxiliary spindle axis ASA of the workpiece W. Consequently, by the above-mentioned rotation tools T5 and T6, additional rotation power can be induced into the auxiliary spindle AS of the machining system, improving the accessibility of the auxiliary spindle AS for machining operations requiring such. Moreover, since during operation of the rotation tool T5 or T6 the fastening element 510 is permanently connected with at least one side W1 or W2 of the workpiece W, rotational imbalances of the workpiece W can be reduced, ultimately leading to a more stable control of the clamped workpiece W during rotational machining operation.

Accordingly, utilizing the aforementioned benefits, the tool holder turrets 200A and 200C of Figure 7a and 7b holding the rotation tools T5 and T6 likewise include at least one additional machining tool T1 and T2 so that during stabilization of the workpiece W, e.g. by means of the rotation tool mounted by a first tool holder turret, at least the other (second) turret may allocate its machining tool for improved workpiece processing. Additionally, in case a different machining tool positioned in said first tool holder turret shall be used in a following machining step, rotation of the workpiece W can be transferred to the rotation tool of the other (second) tool holder turret by simply allocating the respective rotation tool of the second tool holder turret to the workpiece W via the rotational turret axes HTA3 and HTA4 provided for each tool holder turret 200A and 200C.

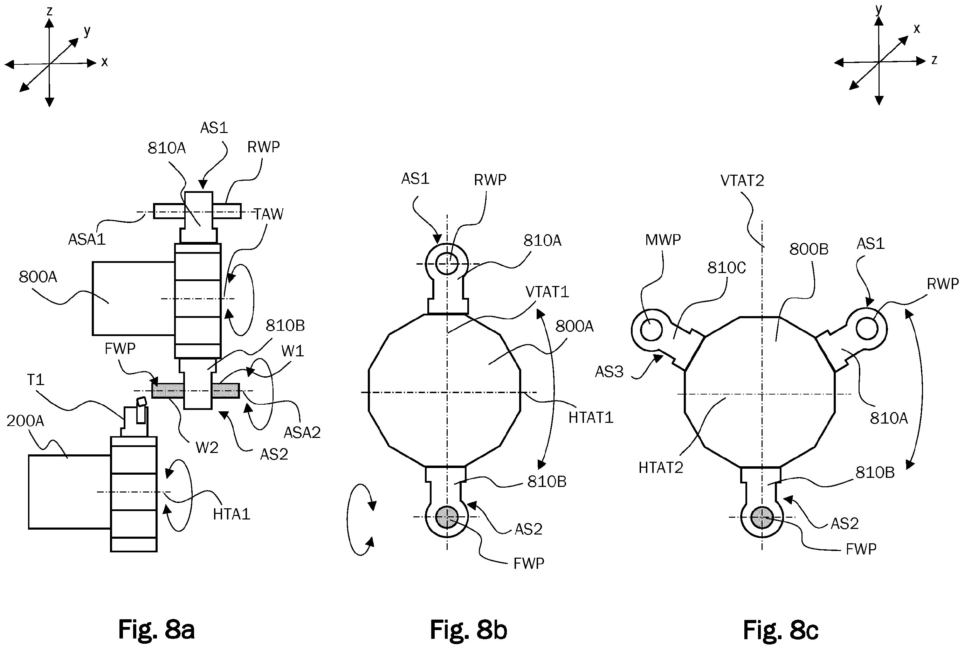

Furthermore, in Figure 8a an additional embodiment of a machining system of the invention is shown comprising at least one tool holder turret 800A mounting at least two auxiliary spindles AS1 and AS2. At it, said tool holder turret 800A is configured to move each of the auxiliary spindles 810A and 810B by rotating at least along the turret axis TAW so that the different workpieces RWP and FWP respectively clamped within the receiving units 810A and 810B of the auxiliary spindles AS1 and AS2 can be individually positioned within the system. Accordingly, with the shown turret composition an efficient and space-saving machining mechanism can be generated. As an example, by the machining system shown in Figure 8a, a raw workpiece RWP can be inserted into the receiving unit 810A of a first auxiliary spindle AS1, for instance in order to enhance the accessability for an assistant to introduce the workpiece RWP into the respective machining system. Alternatively, introduction of a workpiece RWP can be likewise conducted automatically, for instance by transferring the latter from a storage or a spindle similarly positioned within the system. Subsequently, following the clamping of the corresponding raw workpiece RWP within the receiving unit 810A of the auxiliary spindle AS1, the tool holder turret 800A is configured to pivot the clamped workpiece RWP by rotating its corresponding turret head along at least the turret axis TAW so as to allocate the raw workpiece RWP onto the machining tool T1 for machining operations. Finally, after completing the machining process by means of the machining tool T1 (or any additional machining element), the finished workpiece FWP may be again pivoted by the tool holder turret 800A in order to extract it or pass it on to a subsequent machining position, enabling a highly efficient machining line in terms of both, space-efficiency and machining precision.

Further, Figure 8b shows a cross section image of the tool holder turret 800A delineated in Figure 8a. Accordingly, as can be seen by the dashed lines added in Figure 8b, the two auxiliary spindles 810A and 810B are arranged coaxially to a vertical centerline VTAT1 of the tool holder turret 800A (or perpendicular to the horizontal centerline HTAT1, respectively) so that by rotation of the tool holder turret 800A along the turret axis TAW by 180 degrees, the positions of the raw workpiece RWP and the finished workpiece FWP can be easily exchanged. At that, naturally, a corresponding tool holder turret of the claimed machining system is not limited by only mounting the two auxiliary spindles AS1 and AS2, but rather it can hold any number of auxiliary spindles possible by its inherent turret ports.

Consequentially, Figure 8c may be used as an alternative embodiment 800B of the tool holder turret 800A shown in Figure 8a and 8b mounting an additional auxiliary spindle AS3 in a triangular alignment. By this constellation, for example, an additional machining step can be integrated into the aforementioned processing line, producing the pre-machined workpiece MWP clamped into the receiving unit 810C of the auxiliary spindle AS3. Accordingly, by the given embodiment, an even more sophisticated machining process can be achieved.

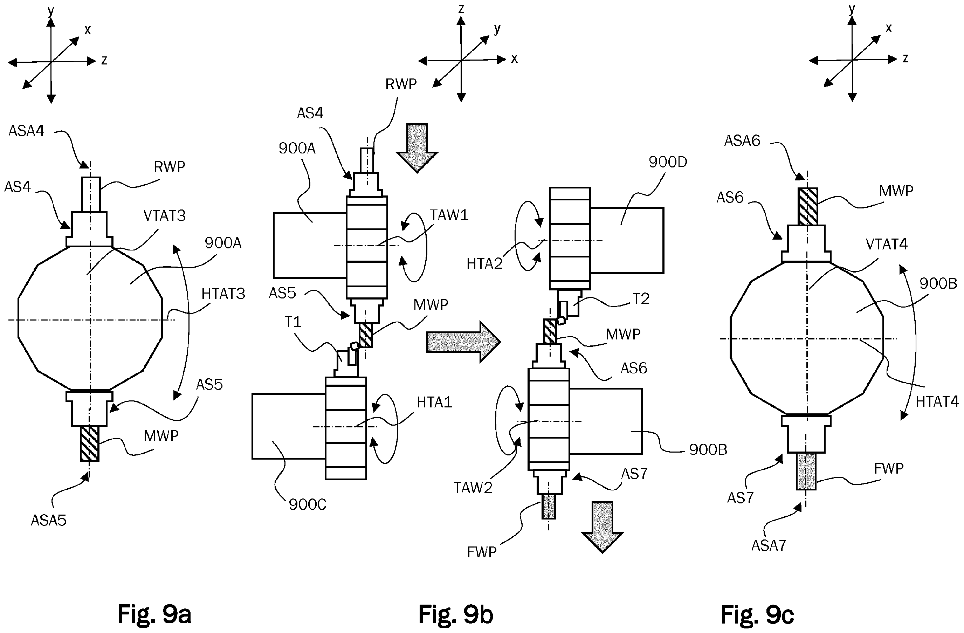

Furthermore, based on the aforementioned embodiment, Figure 9a - c shows another machining mechanism conductable by the machining system of the claimed invention. Here, equal to the embodiment shown in Figure 5a, the corresponding machining system comprises four tool holder turrets 900A - 900D by which the two tool holder turrets 900A and 900B are configured to individually mount two auxiliary spindles AS4 - AS7 of the type already shown in Figure 4a and 4b, while the tool holder turrets 900C and 900D respectively mount the machining tools T1 and T2. In addition, Figure 9a and 9c again show a cross section image of the respective tool holder turrets 900A and 900B with the auxiliary spindles AS4 - AS7 similarly coaxially aligned to a vertical centerline VTAT3 or VTAT4 (or respectively perpendicular to the horizontal centerline HTAT3 or HTAT4). The expressions horizontal and vertical concern arrangements in relation to the work floor.

Accordingly, within the described machining system, a production line additionally using transfer processes of a workpieces W in between auxiliary spindles AS4 - AS7 is shown. More specifically, in this given embodiment, the operation procedure provides the machining mechanism to firstly insert and clamp a raw workpiece RWP into a first auxiliary spindle AS4 of a first tool holder turret 900A so that the production line may start. Consecutively, as a second step, the raw workpiece RWP may be allocated to the first machining tool T1 by pivoting the auxiliary spindle via rotation of the tool holder turret 900A along the turret axis TAW1, finally enabling a pre-machining of the clamped raw workpiece RWP and thus the production of the pre-machined workpiece MWP. Furthermore, to continue the processing mechanism, said pre-machined workpiece MVP is subsequently transferred from the aforementioned auxiliary spindle AS4 to auxiliary spindle AS6 mounted onto the second tool holder turret 900B so as to enable machining via the second machining tool T2 and the production line is finished by once more pivoting the finalized workpiece FWP via rotation of the tool holder turret 900B along the turret axis TAW2, allowing extraction of the workpiece and/or further processing by external machining elements.

Herein, the act of transferring the pre-machined workpiece MWP may be exemplary conducted by approaching the receiving auxiliary spindle AS6 with the workpiece MWP, specifically by precisely agitating the tool holder turret 900A towards said auxiliary spindle AS6 and allowing it to additionally clamp an available site of the workpiece while, at the same time, releasing it from its former fixation. Alternatively, also an external transfer element, such as a workpiece grabber, may be used so that a secured transmission of a workpiece can be achieved.

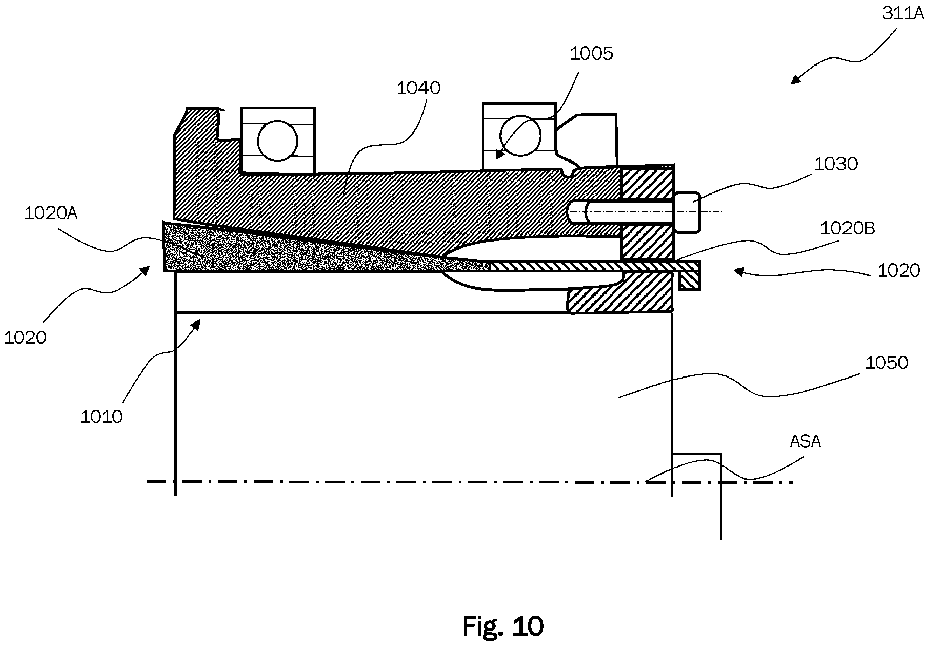

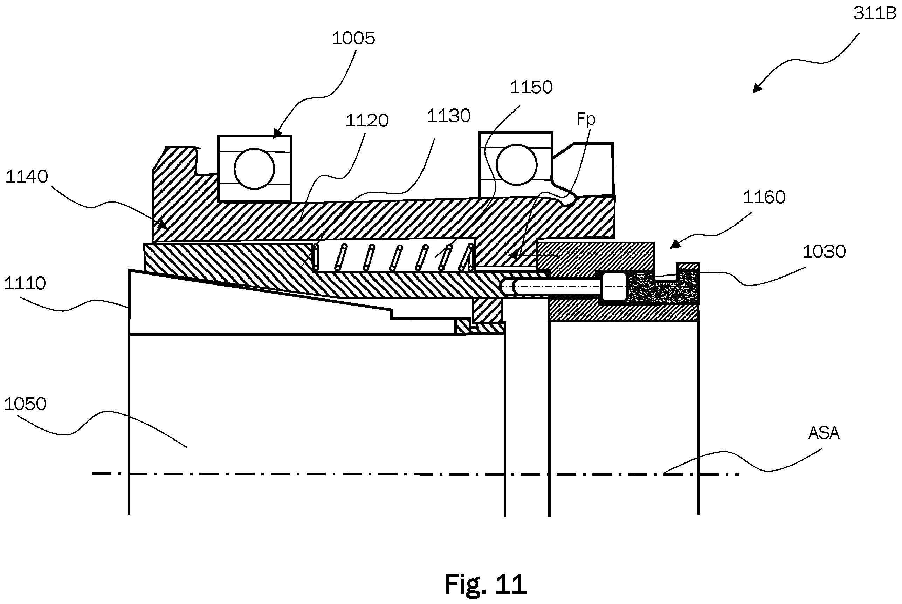

Finally, with Figure 10 and 11, two preferred embodiments of the clamping mechanism for mechanically clamping a respective workpiece W into a receiving unit 311A and 311B of an auxiliary spindle AS are shown. Here, respective mechanisms may be driven manually or (semi)automatically, for instance by the internal driving system of the tool holder turret the auxiliary spindle AS is mounted onto.

Figure 10 shows a first mechanism by depicting a sketched cross-section of the receiving unit 311A along the aforementioned auxiliary spindle axis ASA. In particular, in this embodiment the receiving unit 311A consist of a cavity 1050 used to insert the respective workpiece W into the receiving unit 311A as well as mechanically adjustable body 1005 build around the above stated cavity 1050. Here, to clamp a respective workpiece W within the receiving unit 310A, the body 1005 further has a bottom 1010 and a top component 1040 connected via a screw element 1030 as well as a wedge element 1020 placed in between, comprising a wedge-shaped proportion 1020A on the one end, that is rectilinear at its side facing the bottom component 1010 and increasing in diameter at the side facing the top component 1040, as well a rectilinear proportion 1020B at its other end. Additionally, to slidably fit the wedge element 1020 in between the bottom 1010 and the top component 1040 of the body 1005, the interstice associated to the wedge-shaped proportion 1020A between the top 1040 and the bottom component 1010 is likewise built wedge-shaped while, on the other end, the distance between the top 1040 and bottom component 1010 associated with the rectilinear proportion 1020B remains constant.

Accordingly, in order to fixate an inserted workpiece W by means of mechanically clamping it onto the receiving unit 311A, the body 1005 is built in a way that by pushing the wedge-shaped proportion 1020A into its corresponding interstice built in between the top 1040 and the bottom component 1010, the wedge-shaped proportion 1020A eventually reaches a point at which it, due to the size of the similarly wedge-shaped interstice, cannot move further, thus creating a pressure force perpendicular to the contact area between the wedge-shaped proportion 1020A and the bottom 1010 and top component 1040 of the body 1005 respectively. As a consequence, since within the given embodiment the contact area between the wedge-shaped proportion 1020A and the bottom component 1010 is constructed to be parallel to the inner surface of the body 1005, the pressure force generated by said pushing of the wedge-shaped proportion 1020A results in a pressing motion of the bottom component 1010 in radial direction, hence is able to firmly press the inner surface of the body 1005 onto an inserted workpiece W and thus enable mechanical fixation by means of clamping.

Figure 11, in contrast, shows a second mechanism for fixating a workpiece W into the receiving unit 310B that, in comparison to the wedge element 1020 shown in Figure 10, utilizes a spring mechanism 1150 to transmit the aforementioned pressure force onto an inserted workpiece W.

More specifically, in this case the body 1005 of the receiving unit 311B likewise has a bottom component 1110 as well as a top component 1140, wherein the top component 1140 may be further portioned into a force transmission portion 1130 that is slidably attached to the upper surface of the bottom component 1110 as well as an reactive portion 1120 placed above the force transmission portion 1130 and which is horizontally connected to it via a spring 1150. Additionally, the force transmission portion 1130 of the top component 1140 may be further connected via the screw 1030 to a pushing block 1160 so that by introducing the screw 1030 into the transmission portion 1130, a part of the pushing block 1160 may push the reactive portion 1120, resulting in a dislocation of the reactive portion 1120 coaxially to the length axis of the coil spring 1150.

Accordingly, for generating the aforementioned pressure force in this embodiment, initially the screw 1030 may be further introduced into the force transmission portion 1130 leading to an agitation of the pushing block towards the reactive portion 1120 and, in case of contact, to a pushing force Fp transmitted to the latter. Subsequently, as a consequence of the above-mentioned pushing force Fp, the reactive portion 1120 may become dislocated resulting in a compression of the spring 1150 placed in between the reactive portion 1120 and the force transmission portion 1130, which, in turn, presses the force transmission portion 1130 onto the bottom component 1110 of the receiving unit 310B and with it again produces an adjustable and stable pressure force onto the inner surface of the receiving unit 310B.

Accordingly, by the aforementioned embodiments, it could be shown that by use of the auxiliary spindle implemented in different variations of machining systems, highly adaptable and efficient machining operations on at least one tool holder turret can be performed. Even more, since said machining operations can be conducted independently and/or in addition to the conventional operations of a corresponding tooling machine, e.g. on a working spindle, it is evident that the claimed invention may lead to vast improvements for tooling machines in terms of space-efficiency, operation times and the general adaptability of the system.

Lastly, it also has to be noted again that, while certain exemplary embodiments and/or aspects have been described and shown in the accompanying drawings, it is to be understood that such embodiments and aspects are merely illustrative of and are not restrictive on the broad invention, and that the embodiments of the invention are not limited to the specific constructions and arrangements shown and described, since various other changes, combinations, omissions, modifications and substitutions, in addition to those set forth in the above sections, are possible.

Also, those skilled in the art will appreciate that various adaptations, modifications, and/or combinations of the just described embodiments can be configured without departing from the scope of disclosure of the present invention. Those skilled in the art will also appreciate, in view of this disclosure, that different embodiments of the invention described herein may be combined to form other embodiments of the invention. Therefore, it is to be understood that the invention may be also practiced other than as specifically described herein.

## Claims

1. Machining method for machining at least one workpiece (W) in a machining system, in particular a lathe, comprising at least one tool holder turret (200A - 200D) for holding a number of tools (T1 - T4) for machining operations and at least one auxiliary spindle (AS) mounted to the tool holder turret (200A - 200D), wherein the auxiliary spindle (AS) includes at least a receiving unit (311A; 311B) for receiving a workpiece (W) for machining operations, the machining method comprising the steps:
- on the tool holder turret (200A - 200D), clamping the workpiece (W) by the receiving unit (311A; 311B) of the auxiliary spindle (AS);
- rotating the clamped workpiece (W) along an auxiliary spindle axis (ASA) for machining the clamped workpiece (W).

2. The machining method according to claim 1, wherein the machining method further includes:
- machining the clamped workpiece (W) on the tool holder turret (200A - 200D) by a tool (T1 - T4) mounted onto the at least one tool holder turret (200A - 200D) and/or a tool (T1 - T4) mounted onto a main spindle (MS) implemented in the machining system.

3. The machining method according to any of the preceding claims, wherein the machining method further includes:
- pivoting the clamped workpiece (W), by rotating the tool holder turret (200A - 200D) the auxiliary spindle (AS) is mounted onto, along a turret axis (TAW);
- moving the clamped workpiece (W), by translatory moving the tool holder turret (200A - 200D) the auxiliary spindle (AS) is mounted onto, in at least one of three directions.

4. The machining method according to any of the preceding claims further includes:
- coupling the auxiliary spindle (AS) to the driving system of the tool holder turret (200A - 200D) by mechanically connecting the auxiliary spindle (AS) to a tool turret port of the tool holder turret (200A - 200D);
- driving the rotation of the clamped workpiece (W) by a torque generated by a drive of the at least one tool holder turret (200A - 200D).

5. The machining method according to any of the preceding claims further includes:
- transferring the clamped workpiece (W) from a first auxiliary spindle (AS1) to a main spindle (MS) of the machining system and/or vice versa;
- transferring the clamped workpiece (W) from a first auxiliary spindle (AS1) to a second auxiliary spindle (AS2) mounted to the same or a different tool holder turret (200A - 200D) as the first auxiliary spindle (AS1),
and/or
wherein the machining method further includes:
- driving a machining tool (T1 - T4) mounted on the tool holder turret (200A
- 200D) while, at the same time, having at least one workpiece (W) clamped on the tool holder turret (200A - 200D) of the machining system, and/or
- connecting the clamped workpiece (W) with at least one rotation tool (T5;
T6) of the same or different tool holder turret (200A - 200D) the auxiliary spindle (AS) clamping the workpiece (W) is mounted on;
- driving the rotation of the clamped workpiece (W) externally by a torque generated by the at least one rotation tool (T5; T6).

6. Computer program product comprising instructions to cause a machining system of claim 1 to execute the steps of at least one of claims 1 to 5.

7. Auxiliary spindle (AS) for clamping at least one workpiece(W) on a tool holder turret (200A - 200D) for machining operation, in particular a tool holder turret (200A - 200D) of a lathe (230), comprising:
- at least one spindle unit (310) mountable onto a tool turret port of the tool holder turret (200A - 200D) and configured to receive a workpiece (W) for machining operation of the received workpiece (W) on the tool holder turret;
wherein the spindle unit (310) further includes at least a receiving unit (311A; 311B) configured to clamp the workpiece (W) onto the auxiliary spindle (AS).

8. The auxiliary spindle (AS) according to claim 7, wherein the auxiliary spindle (AS) is configured to rotate the clamped workpiece (W) along an auxiliary spindle axis (ASA) for machining the clamped workpiece (W) on the tool holder turret (200A - 200D), and/or
wherein the auxiliary spindle (AS) is configured by mounting the spindle unit (310) to the at least one tool holder turret (200A - 200D) to physically couple the auxiliary spindle (AS) to the driving system of the tool holder turret (200A - 200D) so that the auxiliary spindle (AS) can be controlled by the turret driving system.

9. The auxiliary spindle (AS) according to any of the preceding claims, wherein the spindle unit (310) is configured to clamp the workpiece (W) at at least one contact position exposing at least two opposing ends (W1; W2) of the clamped workpiece (W) for machining operations,
and /or wherein the spindle unit (310) includes a sleeve which can be controlled to clamp the workpiece (W);
wherein the sleeve is configured to align the fixated workpiece (W) coaxially to the auxiliary spindle axis (ASA).

10. The auxiliary spindle (AS) according to any of the preceding claims, wherein the spindle unit (310) includes at least one chuck which can be controlled to fixedly clamp the workpiece (W);
wherein the at least one chuck is configured to align the clamped workpiece (W) coaxially to the auxiliary spindle axis (ASA); and
wherein the at least one chuck includes jaws that are configured to move independently so as to firmly hold irregularly shaped workpieces (W).

11. A machining system for machining at least one workpiece (W), in particular a lathe (230), comprising:
- at least one tool holder turret (200A - 200D) for mounting a number of tools (T1 - T4) on at least one tool turret port for machining operations, in particular live tooling; and
- at least one auxiliary spindle (AS) of claim 9 to 14 mounted to the at least one tool holder turret (200A - 200D) or another tool holder turret (200A - 200D) implemented in the machining system.

12. The machining system according to claim 11, wherein the workpiece (W) clamped by receiving unit (311A; 311B) of the auxiliary spindle (AS) can be rotated along the auxiliary spindle axis (ASA);
wherein the rotation of the workpiece (W) is driven by at least a torque generated by a drive of the tool holder turret (200A - 200D).

13. The machining system according to any of the preceding claims, wherein the machining system is configured, by clamping the workpiece (W) onto the receiving unit of the auxiliary spindle (AS), to machine the workpiece (W) on the tool holder turret (200A - 200D) by at least one machining tool (T1 - T4) mounted at a main spindle (MS) of the machining system and/or at least one machining tool (T1 - T4) mounted on one of the tool holder turrets (200A - 200D) of the machining system, and/or
wherein the tool holder turret (200A - 200D) the auxiliary spindle (AS) is mounted onto is configured, by at least a rotational movement along a turret axis (TAW) and/or a translational movement, to adjust the position of the workpiece (W) clamped by the receiving unit of the auxiliary spindle (AS) and/or the direction of the auxiliary spindle axis (ASA).

14. The machining system of any of the preceding claims, wherein the tool holder turret (200A - 200D) the at least one auxiliary spindle (AS) is mounted onto is configured to mount at least one additional machining tool (T1 - T4), and/or
wherein the tool holder turret (200A - 200D) the at least one auxiliary spindle (AS) is mounted onto is configured to both, position a clamped workpiece (W) on the auxiliary spindle (AS) for at least machining operations of the workpiece (W) on the tool holder turret (200A - 200D) and position at least one tool (T1 - T4) for machining a workpiece (W).

15. The machining system according to any of the preceding claims, wherein the machining system includes at least a first and a second tool holder turret (200A - 200D) on which at least a first (AS1) and a second auxiliary spindle (AS2) are respectively mounted to;
wherein the machining system is configured, by the movement of the at least two tool holder turrets (200A - 200D), to transfer a workpiece (W) clamped by the receiving unit of the first auxiliary spindle (AS1) of the first tool holder turret (200A - 200D) to the receiving unit of the second auxiliary spindle (AS2) of the second tool holder turret (200A - 200D), and/or
wherein at least one tool holder turret (200A - 200D) of the machining system is configured to mount at least two auxiliary spindles (AS1 - AS6) capable of individually clamping a workpiece (W) for machining processes; and
wherein the machining system is configured to independently machine each of the clamped workpieces (W) by at least one machining tool (T1 - T4) clamped into a main spindle (MS) of the machining system and/or at least one machining tool (T1 - T4) mounted on one of the tool holder turrets (200A - 200D) of the machining system.
